# EUROPEAN PATENT APPLICATION

(11) **EP 4 561 050 A1**
(43) Date of publication of application: **28.05.2025**
(21) Application number: 23867524.3
(22) Date of filing: 19.09.2023
(51) Int. Cl.: H04N 5/222, H04N 23/00

(54) **CAMERA MODULE AND ELECTRONIC DEVICE**

(30) Priority: 22.09.2022 CN 202211169769
(71) Applicant: Huawei Technologies Co., Ltd., Shenzhen, Guangdong 518129 (CN)
(72) Inventor: HU, Jia, Shenzhen, Guangdong 518129 (CN); LI, Xiaolong, Shenzhen, Guangdong 518129 (CN)
(74) Representative: Goddar, Heinz J.
(86) International application number: PCT/CN2023/119834
(87) International publication number: WO 2024/061237

(57) **Abstract**

This application relates to the field of electronic device technologies, and discloses a camera module and an electronic device. The camera module includes an imaging assembly and an infrared emission component. The imaging assembly may include an optical lens, a light filter, and an image sensor. The infrared emission component is configured to emit infrared light, and the optical lens is configured to receive ambient light and infrared light reflected by an external object. The light filter is disposed between the optical lens and the image sensor, and the light filter is configured to transmit ambient light and infrared light. The imaging assembly is configured to perform imaging, and the image sensor is further configured to receive ambient light information to generate a photo. The image sensor is further configured to receive infrared light information to generate an infrared light image, so that the imaging assembly detects a distance between the external object and the optical lens. The camera module can not only help provide an aesthetic appearance of the electronic device but also helps implement a light sensing detection function of the camera module.

## Description

### CROSS-REFERENCE TO RELATED APPLICATIONS

This application claims priority to Chinese Patent Application No. 202211169769.7, filed with the China National Intellectual Property Administration on September 22, 2022 and entitled "CAMERA MODULE AND ELECTRONIC DEVICE", which is incorporated herein by reference in its entirety.

### TECHNICAL FIELD

This application relates to the field of electronic device technologies, and in particular, to a camera module and an electronic device.

### BACKGROUND

A light sensing component is generally disposed in an existing electronic device, and the light sensing component may be configured to perform proximity light detection and ambient light detection. The proximity light may be generally used in a scenario in which a user makes a call. When the face of the user is close to a device, a screen of the device is controlled to be on or off, to avoid an accidental touch. The ambient light can be used in different light scenarios. Luminance of the screen can be adjusted by detecting ambient luminance, to improve user experience.

Currently, when the light sensing component is used, the light sensing component is usually placed in a screen opening or the light sensing component is placed under the screen. However, the screen opening affects aesthetics of the electronic device, and affects a display area of the screen. When the light sensing component is placed under the screen, detection performance of the light sensing component is affected due to a screen transmittance.

### SUMMARY

This application provides a camera module and an electronic device, so that a light sensing detection function of the camera module can be implemented without an additional opening on a screen, and precision of light sensing detection is improved.

According to a first aspect, this application provides a camera module, including an imaging assembly and an infrared emission component. The imaging assembly may include an optical lens, a light filter, and an image sensor. The infrared emission component is configured to emit infrared light, the optical lens is configured to receive infrared light reflected by an external object, and the optical lens is further configured to receive ambient light. The light filter is disposed between the optical lens and the image sensor, and the light filter is configured to transmit ambient light and infrared light. The imaging assembly may be configured to perform imaging, and the image sensor may be configured to receive ambient light information to generate a photo. The imaging assembly may be further configured to perform proximity light detection, and the image sensor may be further configured to receive infrared light information to generate an infrared light image, so that the imaging assembly detects a distance between the external object and the optical lens.

According to the camera module provided in this application, proximity light detection and imaging are implemented via the image sensor and the infrared emission component. When imaging is required, the image sensor may receive the ambient light to generate the photo, and the electronic device may display the imaged photo on the screen. When proximity light detection needs to be performed, the image sensor may receive the infrared light to generate the infrared light image, so as to calculate the distance between the external object and the optical lens. The electronic device may control, based on distance information, the screen to be on or off. Therefore, the camera module can implement proximity light detection and an imaging function. Because a light sensing component is omitted, no additional opening needs to be provided on the screen of the electronic device. This improves aesthetics of the electronic device, and the light sensing component does not need to be placed under the screen, thereby avoiding a problem that detection precision is affected.

In some possible implementation solutions, the imaging assembly may be further configured to perform ambient light detection. In this case, the image sensor may be further configured to receive the ambient light information to generate an ambient light image, so that the imaging assembly detects ambient illuminance based on the ambient light image. It may be understood that the imaging assembly may be configured to perform proximity light detection and may be further configured to perform ambient light detection, so that the imaging assembly integrates a plurality of functions, thereby improving an integration level of the interior of the electronic device.

In some possible implementation solutions, the image sensor may include first control information, second control information, and third control information. The image sensor may generate the infrared light image based on the first control information, the image sensor may further generate the ambient light image based on the second control information, and the image sensor may further generate the photo based on the third control information. It may be understood that, when the camera module is used in different working modes, the image sensor may obtain, based on different control information, images required in different modes, so that the electronic device can obtain a more accurate detection effect when processing an image.

In some possible implementation solutions, the image sensor has a first working mode and a second working mode, and resolution, a frame rate, and power consumption of the first working mode are less than those of the second working mode. When the image sensor is in the first working mode, the image sensor may be configured to: generate the infrared light image based on the first control information and/or generate the ambient light image based on the second control information. When the image sensor is in the second working mode, the image sensor may be configured to: generate the infrared light image based on the first control information output, and/or generate the ambient light image based on the second control information, and/or generate the photo based on the third control information. It may be understood that, when the image sensor is configured to detect the proximity light or the ambient light, the image sensor may be enabled to be in the first working mode with low power consumption, thereby reducing power consumption of the electronic device.

In some possible implementation solutions, the image sensor may be further configured to generate the infrared light image based on the third control information, so that the imaging assembly may further detect the distance between the external object and the optical lens based on the infrared light image. It may be understood that when implementing an imaging function, the camera module may further implement a proximity light detection function.

In some possible implementation solutions, the image sensor may be further configured to generate the ambient light image based on the third control information, so that the imaging assembly can detect the ambient illuminance based on the ambient light image. It may be understood that, when the camera module is configured to perform imaging, the camera module may be further configured to perform ambient light detection.

In some possible implementation solutions, the image sensor may be further configured to generate the infrared light image based on the second control information, or the image sensor may be further configured to generate the ambient light image based on the first control information. In other words, when the camera module is configured to detect the ambient light, the camera module may be further configured to perform proximity light detection.

In some possible implementation solutions, a wavelength of the infrared emission light of the infrared emission component is 700 nm to 1000 nm, and infrared light within this wavelength range does not affect normal imaging.

In some possible implementation solutions, a wavelength range of the infrared light that can be transmitted by the light filter may be greater than or equal to a wavelength range of the infrared light emitted by the infrared emitter. In this way, it can be ensured that all infrared light emitted by the infrared emission component can be transmitted by the light filter, thereby ensuring accuracy of proximity light detection.

In some possible implementation solutions, a wavelength of the infrared light that can be transmitted by the light filter is 700 nm to 1000 nm, and infrared light within this wavelength range does not affect normal imaging.

In some possible implementation solutions, the camera module further includes a substrate, and both the imaging assembly and the infrared emission component are disposed on the substrate. The imaging assembly and the infrared emission component are of an integrated structure, so that integration of the camera module can be improved.

In some possible implementation solutions, a baffle is disposed between the imaging assembly and the infrared emission component, and may be configured to prevent light crosstalk between the imaging assembly and the infrared emission component, to avoid an inaccurate result of proximity light detection.

According to a second aspect, this application provides an electronic device, where the electronic device includes a housing, a screen, and the camera module according to any one of the possible implementation solutions of the first aspect. The screen may be disposed on the housing, the camera module may be disposed in the interior of the housing, a camera opening is disposed on the screen, and the optical lens of the camera module may be located in the camera opening. In this way, the optical lens may receive external ambient light through the camera opening.

According to the electronic device provided in this application, the camera module according to the first aspect is disposed, to avoid providing another opening on the screen or placing the sensor under the screen. This not only helps the electronic device have an aesthetic appearance, but also avoids impact on detection precision, which improves use performance of the electronic device.

In some possible implementation solutions, the electronic device may further include a processor. The processor may be disposed in the interior of the housing, and the processor may be electrically connected to the image sensor. The processor may control the screen to be on or off based on the distance between the external object and the optical lens. The processor may further display the photo on the screen.

In the foregoing electronic device, the processor is connected to the camera module, to implement proximity light detection and imaging functions of the electronic device, thereby improving integration of the electronic device.

### BRIEF DESCRIPTION OF DRAWINGS

FIG. 1 is a diagram of a structure of an electronic device according to an embodiment of this application;
FIG. 2 is an exploded diagram of a part of the structure of the electronic device in FIG. 1;
FIG. 3 is a diagram of a structure of a camera module according to an embodiment of this application;
FIG. 4 is a diagram of a structure of an imaging assembly in FIG. 3;
FIG. 5 is a diagram of control logic for imaging of an electronic device according to an embodiment of this application;
FIG. 6 is a diagram of control logic for ambient light detection of an electronic device according to an embodiment of this application;
FIG. 7 is a diagram of control logic for setting a screensaver of an electronic device according to an embodiment of this application;
FIG. 8 is a diagram of control logic for proximity light detection of an electronic device according to an embodiment of this application;
FIG. 9 is a diagram of control logic for imaging and ambient light detection of an electronic device according to an embodiment of this application;
FIG. 10 is a diagram of control logic for imaging, ambient light detection, and proximity light detection of an electronic device according to an embodiment of this application; and
FIG. 11 is a diagram of control logic for ambient light detection and proximity light detection of an electronic device according to an embodiment of this application.

### Reference numerals:

1: electronic device; 2: external object; 100: housing; 110: middle frame; 120: rear cover; 200: screen; 210: cover plate; 211: camera opening; 220: display; 300: host circuit board; 400: camera module; 410: imaging assembly; 411: optical lens; 412: light filter; 413: image sensor; 4131: light sensing module; 420: infrared emission component; 430: substrate; and 440: baffle.

### DESCRIPTION OF EMBODIMENTS

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "have", and their variants all mean "include but are not limited to", unless otherwise specifically emphasized in another manner.

During production and manufacturing of an existing electronic product, a light sensing component is usually disposed. Currently, a commonly used light sensing component is a three-in-one component of proximity light, ambient light, and transmission. Proximity light detection is usually applied to a scenario in which a user makes a call. When the face of the user is close to a screen of an electronic device, the screen is controlled to be off, to prevent the user from accidentally touching the screen. Ambient light detection may be applied to different light scenarios, and ambient luminance is detected to assist in screen luminance adjustment, thereby improving comfort of using an electronic device by a user.

Currently, when the light sensing component is disposed in the electronic device, the light sensing component is generally implemented in the following two manners. A first manner is to provide an opening on a screen of the electronic device, and the light sensing component is disposed in the opening. A second manner is to dispose the light sensing component under the screen. However, when the light sensing component is disposed by providing an opening on the screen, because a camera module of the electronic device also needs to provide an opening, an area of the openings on the screen is increased. This affects aesthetics of the electronic device, and affects a display effect of the screen. When the light sensing component is placed under the screen, with a development trend of gradually decreasing screen transmittance, a screen with a low transmittance may cause a decrease in detection performance of the light sensing component. Because the screen also emits light, detection of the light sensing component is also affected. Therefore, a more complex algorithm is required to avoid an impact of the light emitted by the screen on the light sensing component. In addition, because a transmitting part of the light sensing component is placed under the screen, higher lighting power is also required. This causes an increase in power consumption, and causes interference or irreversible loss to screen display.

Based on this, embodiments of this application may provide a camera module and an electronic device, so that no additional opening needs to be provided on a screen, efficient detection of ambient light and detection light can be implemented, and interference or loss caused to the screen can be avoided.

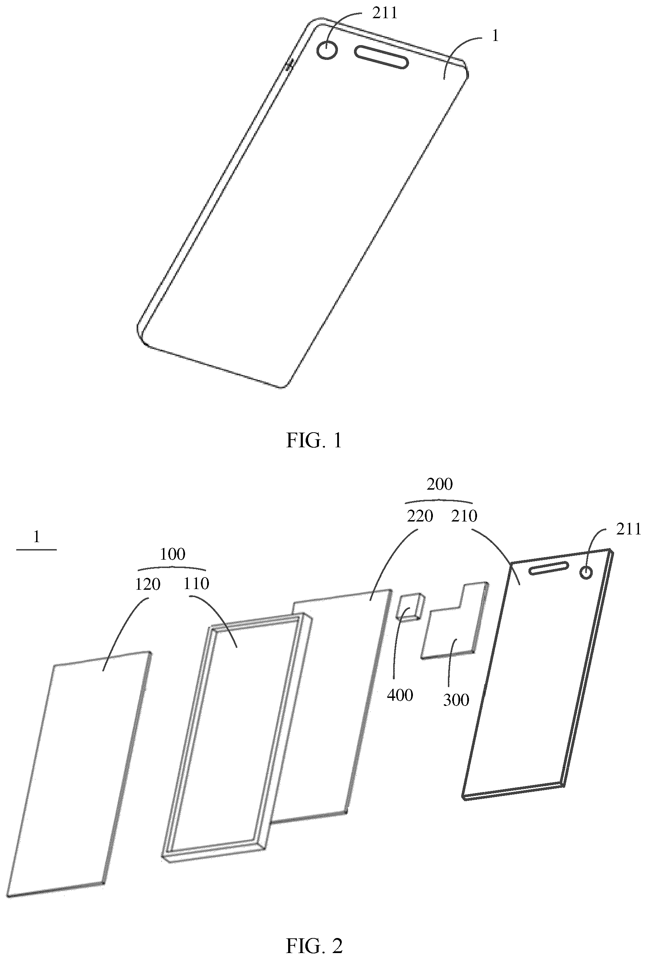

FIG. 1 is a diagram of a structure of an electronic device according to an embodiment of this application. An electronic device 1 may be a mobile phone, a tablet computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, a VR helmet, or another form of device with a photographing function. In the embodiment shown in FIG. 1, descriptions are provided by using an example in which the electronic device 1 is a mobile phone.

Refer to FIG. 1 and FIG. 2. FIG. 2 is an exploded diagram of a part of the structure of the electronic device 1 in FIG. 1. The electronic device 1 may include a housing 100, a screen 200, a host circuit board 300, and a camera module 400. It should be noted that FIG. 1, FIG. 2, and the following related accompanying drawings show only some components included in the electronic device 1 as examples, and actual shapes, actual sizes, actual locations, and actual structures of these components are not limited by FIG. 1, FIG. 2, and the following accompanying drawings. In addition, when the electronic device 1 is a device in another form, the electronic device 1 may not include the screen 200 or the host circuit board 300.

The housing 100 may include a middle frame 110 and a rear cover 120. The rear cover 120 may be fastened to one side of the middle frame 110, and the screen 200 is fastened to the other side of the middle frame 110. In other words, the screen 200 and the rear cover 120 are disposed opposite to each other. The screen 200, the middle frame 110, and the rear cover 120 jointly enclose the interior of the electronic device 1. The host circuit board 300 may be disposed in the interior of the electronic device 1. In addition, the interior of the electronic device 1 may be used to place a component of the electronic device 1, like a battery, a receiver, and a microphone.

In this embodiment, the screen 200 may be configured to display an image, a text, and the like. The screen 200 may be a flat screen or a curved screen. The screen 200 includes a cover plate 210 and a display 220. The cover plate 210 is stacked on a side that is of the display 220 and that is away from the middle frame 110. The cover plate 210 may be disposed in close contact with the display 220, and may be mainly configured to protect the display 220 against dust. A material of the cover plate 210 may be, but is not limited to, glass. The display 220 may be an organic light-emitting diode (organic light-emitting diode, OLED) display 220, an active-matrix organic light-emitting diode (active-matrix organic light-emitting diode, AMOLED) display 220, a quantum dot light emitting diode (quantum dot light emitting diode, QLED) display 220, or the like.

It may be understood that the host circuit board 300 may be a rigid circuit board, a flexible circuit board, or a rigid-flexible circuit board. The host circuit board 300 may be an FR-4 dielectric board, may be a Rogers (Rogers) dielectric board, may be a dielectric board combining FR-4 and Rogers, or the like. Herein, FR-4 is a grade designation for a flame-resistant material, and the Rogers dielectric board is a high-frequency board. In addition, the host circuit board 300 may be configured to set a chip. The chip may be a central processing unit (central processing unit, CPU), a graphics processing unit (graphics processing unit, GPU), a universal flash storage (universal flash storage, UFS), or the like.

A camera opening 211 is disposed on the cover plate 210, the camera module 400 is disposed in the interior of the electronic device 1, and the camera module 400 may receive ambient light from the outside through the camera opening 211 disposed on the cover plate 210. It may be understood that the camera module 400 in this embodiment is a front-facing camera module 400 of the electronic device 1, and when the camera module 400 is used for photographing, a requirement of a user for taking a selfie may be met. In addition, the camera module 400 is electrically connected to the host circuit board 300. Specifically, the camera module 400 is electrically connected to a processor through the host circuit board 300. The processor may be a graphics processing unit (graphics processing unit, CPU) or a central processing unit (central processing unit, CPU). When the processor receives an instruction of the user, the processor can send a signal to the camera module 400 through the host circuit board 300, to control the camera module 400 to take an image or record a video. In another embodiment, when the host circuit board 300 is not disposed in the electronic device 1, the camera module 400 may also directly receive an instruction of the user, and take an image or record a video based on the instruction of the user.

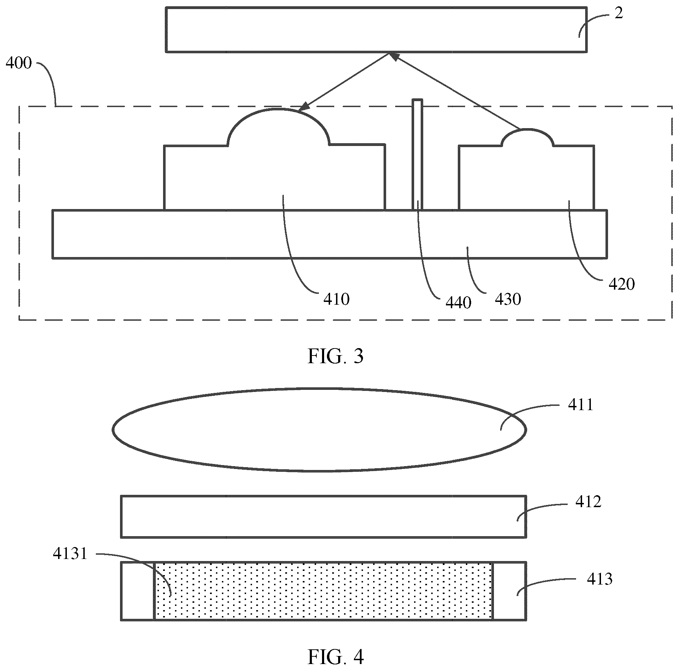

FIG. 3 is a diagram of a structure of a camera module 400 according to an embodiment of this application. The camera module 400 may include an imaging assembly 410 and an infrared emission component 420. The infrared emission component 420 may be configured to emit infrared light to the outside of the electronic device 1. When an external object 2 (for example, the face or the hand of the user) is encountered, the infrared light may be reflected by the external object 2, so that the infrared light is received by the imaging assembly 410. In addition, as described above, the imaging assembly 410 may be further configured to receive ambient light from the outside.

The infrared emission component 420 may be a vertical-cavity surface-emitting laser (vertical-cavity surface-emitting laser, VCSEL) or a light-emitting diode (light-emitting diode, LED). In addition, the infrared emission component 420 may alternatively be a transmitter of another type. This is not limited in embodiments.

With reference to FIG. 3 and FIG. 4, FIG. 4 is a diagram of a structure of the imaging assembly 410 in FIG. 3. The imaging assembly 410 may include an optical lens 411, a light filter 412, and an image sensor 413. The light filter 412 may be disposed between the optical lens 411 and the image sensor 413. The light filter 412 may be configured to transmit ambient light and infrared light, and the ambient light herein may also be understood as visible light. When external ambient light enters the camera module 400 or infrared light emitted by the infrared emission component 420 is reflected back to the camera module 400, the image sensor 413 may receive ambient light information transmitted through the optical lens 411 and the light filter 412 successively, and generate an ambient light image or a photo based on the ambient light information. The image sensor 413 may further receive infrared light information transmitted by the optical lens 411 and infrared light information transmitted by the light filter 412 successively, and output the infrared light information as an infrared light image.

A wavelength of the infrared light emitted by the infrared emission component 420 may be between 700 nm and 1000 nm. For example, the wavelength of the infrared light emitted by the infrared emission component 420 may be 750 nm, 800 nm, 850 nm, 900 nm, or 950 nm. It may be understood that, when the infrared light falls within the foregoing range, quality of the image output by the image sensor 413 is not affected, and a color effect of visible imaging is not affected.

A wavelength range of the infrared light that can be transmitted by the light filter 412 may be greater than or equal to a wavelength of the infrared light emitted by the infrared emission component 420. In this way, it can be ensured that the infrared light emitted by the infrared emission component 420 is received by the image sensor 413 after being transmitted by the light filter 412. A wavelength of the infrared light that can be transmitted by the light filter 412 may be between 700 nm and 1000 nm. For example, the wavelength of the infrared light that can be transmitted by the light filter 412 may be 750 nm, 800 nm, 850 nm, 900 nm, or 950 nm.

In addition, a wavelength of the infrared light emitted by the infrared emission component 420 is used as a center wavelength. For example, the wavelength of the infrared light is 940 nm. To ensure that energy transmitted by the light filter 412 is fixed, when the wavelength of the infrared light that can be transmitted by the light filter 412 is between 920 nm and 960 nm, transmittance of the screen 200 may be under 10%. When the wavelength of the infrared light that can be transmitted by the light filter 412 is between 890 nm and 990 nm, the transmittance of the screen 200 may be under 5%.

Still with reference to FIG. 3 and FIG. 4, when the camera module 400 is disposed in the interior of the electronic device 1, in an implementation solution, the infrared emission component 420 and the imaging assembly 410 may be of an integrated structure. For example, a substrate 430 may further be disposed on the camera module 400, and both the infrared emission component 420 and the imaging assembly 410 are disposed on the substrate 430. Specifically, the image sensor 413 may be fastened to the substrate 430, the light filter 412 may be fastened to a side that is of the image sensor 413 and that is away from the substrate 430, the optical lens 411 may be fastened to a side that is of the light filter 412 and that is away from the image sensor 413, and the infrared emission component 420 may be fastened to a part that is of the substrate 430 and that is located outside the image sensor 413. In this case, a baffle 440 may be further disposed before the infrared emission component 420 and the imaging assembly 410, to prevent the infrared light emitted by the infrared emission component 420 from being directly received by the imaging assembly 410, so as to avoid a phenomenon of light crosstalk. In addition, the optical lens 411 directly faces the camera opening, and the infrared emission component 420 may directly face the camera opening. Alternatively, the infrared emission component 420 is located in a part outside the camera opening. This is not limited in this embodiment.

Certainly, in some other implementation solutions, the infrared emission component 420 and the imaging assembly 410 may be independent of each other, and the infrared emission component 420 may be disposed in any part in the interior of the electronic device 1, provided that a condition that the infrared light emitted by the infrared emission component 420 can pass through the screen 200 is met. For example, the infrared emission component 420 may alternatively be placed in the camera opening 211 shown in FIG. 2, or placed under the screen, or placed in the middle frame 110 shown in FIG. 2.

Still with reference to FIG. 3 and FIG. 4, the image sensor 413 is provided with a light sensing module 4131, and the light sensing module 4131 may be configured to receive infrared light and/or ambient light. A pixel arrangement of the light sensing module 4131 may be any one of the following forms: RGGB, RYYB, RGBIR, RGBW, Bayer, 4in1, 9in1, 16in1, and the like. The RGGB may be understood as that 50% of subpixels in a pixel are green, 25% of subpixels are red, and the other 25% of subpixels are blue. The RYYB may be understood as replacing two green subpixels in the RGGB with two yellow subpixels (Y). The RGBIR may be understood as that some sub-pixels only transmit infrared light. The RGBW may be understood as replacing one green subpixel in the RGGB with one white subpixel. The 4in1, 9in1, and 16in1 may be understood as four-in-one pixels, nine-in-one pixels, and sixteen-in-one pixels, respectively. In other words, a plurality of adjacent pixels are combined into one pixel, to increase a light-sensitive area and improve a signal-to-noise ratio.

The processor in this embodiment may work with the camera module 400 to perform proximity light detection, ambient light detection, and imaging. In addition, when the image sensor 413 is configured to perform proximity light detection, ambient light detection, and imaging, different control information may be set, where the control information may be control parameters such as exposure, a gain, an image output size, and an image output frame rate, so that images with different parameters can be obtained. In this way, the image generated by the image sensor 413 best meets a requirement of a proximity light detection function, an ambient light detection function, or an imaging function, thereby improving accuracy of proximity light detection and ambient light detection, so that high-quality imaged photos can be output. It may be understood that, when the image sensor 413 is configured to detect the proximity light, the image sensor 413 may use first control information, where the first control information may enable the image sensor 413 to separately generate, based on the ambient light information and the infrared light information, the ambient light image and the infrared light image that are required in a proximity light detection mode. When the image sensor 413 is configured to detect the ambient light, the image sensor 413 may use second control information, where the second control information may enable the image sensor 413 to generate, based on the ambient light information, an ambient light image required in an ambient light detection mode. When the image sensor 413 is configured to perform imaging, the image sensor 413 may use third control information, where the third control information may enable the image sensor 413 to output the ambient light information as a photo required in an imaging mode.

The processor may control the image sensor 413 to switch between a working mode in which the first control information is used, a working mode in which the second control information is used, and a working mode in which the third control information is used. In addition, the processor may further output illuminance information of ambient light, a distance between the external object 2 and the electronic device 1, or an imaged photo based on images generated under different control information, to control the screen to be on or off, screen luminance adjustment, or imaged photo display. In addition, the processor may further control the infrared emission component 420 to be started or closed.

With reference to FIG. 2, FIG. 3, and FIG. 4, when the image sensor 413 is configured to perform proximity light detection, the first control information may be enabled. Specifically, the infrared emission component 420 may be first closed. In this case, the image sensor 413 may generate an ambient light image based on the ambient light collected by the light sensing module 4131. Then, the infrared emission component 420 is started. In this case, the infrared light emitted by the infrared emission component 420 is reflected when the infrared light encounters the external object 2, and the image sensor 413 may generate the infrared light image based on the infrared light collected by the light sensing module 4131. The image sensor 413 sends the ambient light image and the infrared light image to the processor. The processor may calculate information about the distance between the external object 2 and the electronic device 1 based on the ambient light image and the infrared light image. The processor may further control the screen 200 to be on or off based on the distance information, to prevent the user from accidentally touching the screen 200.

When the image sensor 413 is configured to detect the ambient light, the second control information may be used. Specifically, the image sensor 413 may generate the ambient light image based on the ambient light collected by the light sensing module 4131, and send the ambient light image to the processor. The processor may calculate an ambient illuminance (a lux value) based on the ambient light image, and the processor may further adjust luminance of the screen 200 based on the ambient illuminance. For example, when ambient luminance is low, the processor controls the screen 200 to be darkened; or when ambient luminance is high, the processor controls the screen 200 to be brightened.

When the image sensor 413 is configured to perform imaging, the third control information may be used. Specifically, the image sensor 413 may generate the photo based on the ambient light collected by the light sensing module 4131, and send the photo to the processor. The processor may process the photo, and then display the processed photo on the screen 200, so that the user can view the photo. It may be understood that when the image sensor 413 is configured to perform imaging, an imaging product generated by the image sensor 413 may be a photo or a video.

The image sensor 413 in this embodiment may have a first working mode and a second working mode. The first working mode may be understood as a low power consumption mode with low resolution and a low frame rate, and the second working mode may be understood as a normal mode with high resolution and a high frame rate. In the first working mode, only some of all subpixels of the light sensing module 4131 of the image sensor 413 work, or all subpixels of the light sensing module 4131 are used in the all-in-one mode described above, that is, a plurality of adjacent subpixels of all subpixels are combined into one subpixel for use. In this case, resolution, a frame rate, and power consumption of the image sensor 413 are low, and the image sensor 413 may be configured to perform proximity light detection and ambient light detection. The image sensor 413 may work via a first control module or a second control module. In some other embodiments, when the image sensor 413 is in the first working mode, the image sensor 413 may be further used in scenarios such as motion detection, gesture and facial recognition, and touchless screen control.

In the second working mode, all sub-pixels of the light sensing module 4131 of the image sensor 413 work normally. In this case, resolution, a frame rate, and power consumption of the image sensor 413 are high, and the image sensor 413 may be used in scenarios such as proximity light detection, ambient light detection, and imaging. The image sensor 413 may work via the first control module, the second control module, or a third control module.

In other words, when the electronic device 1 does not need to perform imaging, the image sensor 413 may be enabled to be in the first working mode, to detect the proximity light and the ambient light in real time, so as to control the screen 200 to be on or off and the luminance of the screen 200. In this case, power consumption of the camera module 400 is low, and an impact on overall power consumption of the electronic device 1 is small.

In addition, the foregoing descriptions of proximity light detection, ambient light detection, and imaging are all described by the electronic device 1 in a separate use scenario. Because the image sensor 413 may be configured to perform proximity light detection and ambient light detection in both the first working mode and the second working mode, when the image sensor 413 is in the first working mode, proximity light detection and ambient light detection may also be simultaneously enabled. When the image sensor 413 is in the second working mode, proximity light detection, ambient light detection, and imaging may be enabled in any combination. The following describes various combinations.

Still with reference to FIG. 2 to FIG. 4, in some embodiments, when the image sensor 413 is configured to perform imaging and is further configured to perform proximity light detection, the image sensor 413 may use the third control information. Specifically, when the infrared emission component 420 is closed, the image sensor 413 may generate the photo based on the ambient light collected by the light sensing module 4131. After the infrared emission component 420 is started, the image sensor 413 may output the infrared light image based on the infrared light collected by the light sensing module 4131. In this case, the processor may detect the distance between the external object 2 and the screen 200 based on the infrared light image and the photo, and control the screen 200 to be on or off based on the distance between the external object 2 and the screen 200. In addition, the processor may further process the photo, and display the processed photo on the screen 200. It may be understood that, in this embodiment, the photo generated during imaging may also be used as the ambient light image generated by the image sensor 413 before the infrared emission component 420 is started during proximity light detection.

It should be noted that, after the infrared emission component 420 is started, the light sensing module 4131 of the image sensor 413 may receive both the infrared light and the ambient light. Therefore, after the infrared emission component 420 is started, the infrared light image generated by the image sensor 413 is actually generated based on both the ambient light and the infrared light. In addition, after the infrared emission component 420 is started, the image sensor 413 may also generate the photo based on the received infrared light and the ambient light. In other words, in this embodiment, the image sensor 413 may generate the photo before the infrared emission component 420 is started. This is not limited.

In some embodiments, when the image sensor 413 is configured to perform imaging and is further configured to perform ambient light detection, the image sensor 413 may use the third control information. Specifically, when the image sensor 413 generates the photo based on the ambient light collected by the light sensing module 4131, the processor may process the photo, then display the processed photo on the screen 200, detect the ambient illuminance based on the photo, and then adjust the luminance of the screen 200 based on the ambient illuminance. It may be understood that, in this embodiment, the photo generated during imaging may also be used as the ambient light image for ambient light detection.

In some embodiments, when the image sensor 413 is configured to perform imaging and is further configured to perform proximity light detection and ambient light detection, the image sensor 413 may use the third control information. Specifically, when the infrared emission component 420 is closed, the image sensor 413 may generate the photo based on the ambient light collected by the light sensing module 4131. After the infrared emission component 420 is started, the image sensor 413 may generate the infrared image based on the infrared light collected by the light sensing module 4131. The processor may detect the distance between the external object 2 and the screen 200 based on the photo and the infrared light image, and control the screen 200 to be on or off based on the distance between the external object 2 and the screen 200. The processor may further detect the ambient illuminance based on the photo, and adjust the luminance of the screen 200 based on the ambient illuminance. The processor may further process the photo, and display the processed photo on the screen 200. It may be understood that, in this embodiment, the photo generated during imaging may be used as the ambient light image for ambient light detection, and may be used as the ambient light image generated by the image sensor 413 before the infrared emission component 420 is started during proximity light detection. In addition, because the infrared light image is actually generated based on both the infrared light and the ambient light, in some other embodiments, the infrared light image may also be used to detect the ambient illuminance.

In some embodiments, when the image sensor 413 performs proximity light detection and ambient light detection, the image sensor 413 may use the first control information or the second control information. When the image sensor 413 uses the first control information, and the infrared emission component 420 is closed, the image sensor 413 may generate the ambient light image based on the ambient light collected by the light sensing module 4131. After the infrared emission component 420 is started, the image sensor 413 may generate the infrared light image based on the infrared light collected by the light sensing module 4131. The processor may detect the ambient illuminance based on the ambient light image, and adjust the luminance of the screen 200 based on the ambient illuminance. The processor may further detect the distance between the external object 2 and the screen 200 based on the infrared light image and the ambient light image, and control the screen 200 to be on or off based on the distance between the external object 2 and the screen 200. Similarly, when the image sensor 413 uses the second control information, a process controlled by the processor is similar to that when the image sensor 413 uses the first control information. This is not described herein again.

After the structure of the electronic device provided in this application is described, the following describes several working modes of the electronic device by using examples.

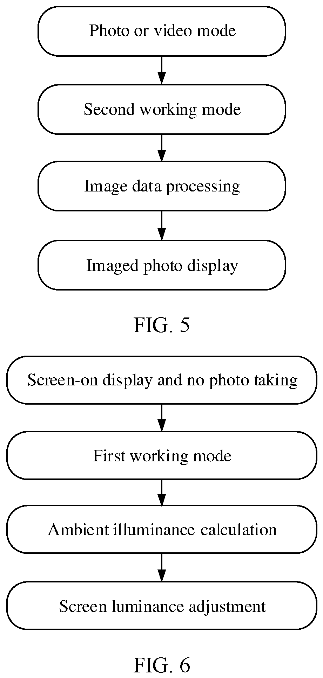

Refer to FIG. 5. The image sensor is in the second working mode, and the infrared emission component is closed. The image sensor generates the photo based on the third control information, the processor may process the photo, and the electronic device may preview, take a photo, or record a video.

Refer to FIG. 6. The image sensor is in the first working mode, and the infrared emission component is closed. The image sensor generates the ambient light image based on the second control information, the processor detects the ambient illuminance based on the ambient light image, and the electronic device may perform screen luminance adjustment based on the illuminance.

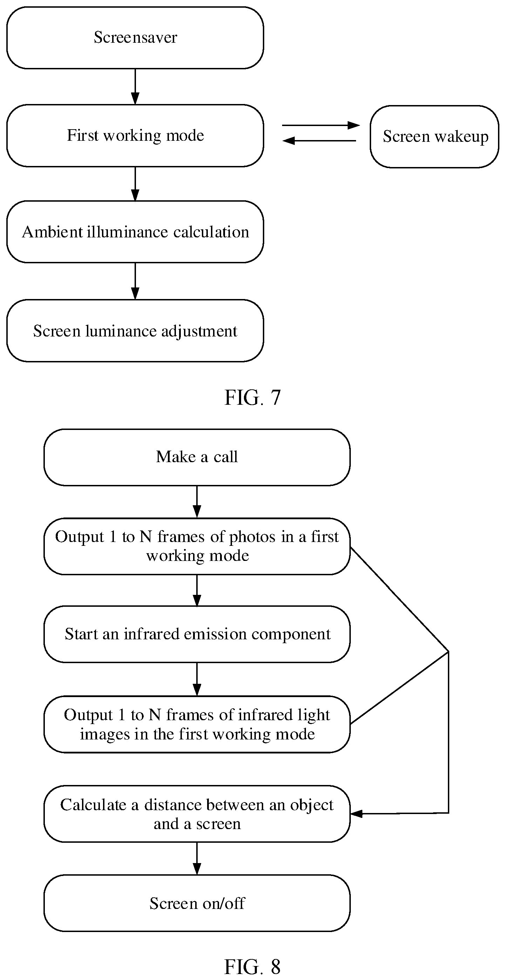

When a screensaver is set for the electronic device, refer to FIG. 7. When the electronic device is in a screen saver state, the image sensor is in the first working mode, and the infrared emission component is closed. The image sensor generates the ambient light image based on the second control information, the processor detects the ambient illuminance based on the image, and the electronic device may perform screen luminance adjustment in the screen saver state. In addition, when the electronic device is in the screen saver state, the processor may further determine, based on the generated ambient light image, whether there is the face or the hand of the user in the image, and calculate a distance between the face or the hand of the user and the screen. When the face or the hand of the user is close to the screen, the screen may be woken up.

Refer to FIG. 8. When the image sensor is in the first working mode and the infrared emission component is closed, the image sensor generates 1 to N frames of ambient light images based on the first control information. After the infrared emission component is started, the image sensor generates 1 to N frames of infrared light images based on the first control information. The processor acquires image data before and after the infrared emission component is started, subtracts the image data before the infrared emission component is started from the image data after the infrared emission component is started, and extracts a difference between the image data before and after the infrared emission component is started, to calculate the information about the distance between the external object and the screen. The electronic device may control the screen to be on or off based on the distance information.

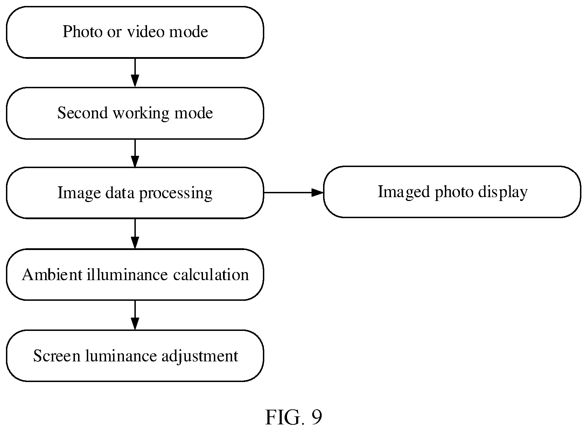

Refer to FIG. 9. The image sensor is in the second working mode, and the infrared emission component is closed. The image sensor generates the photo based on the third control information, the processor processes the photo, and the electronic device may preview, take a photo, or record a video. In addition, the processor may further detect the ambient illuminance based on the photo, and the electronic device performs screen luminance adjustment based on the illuminance.

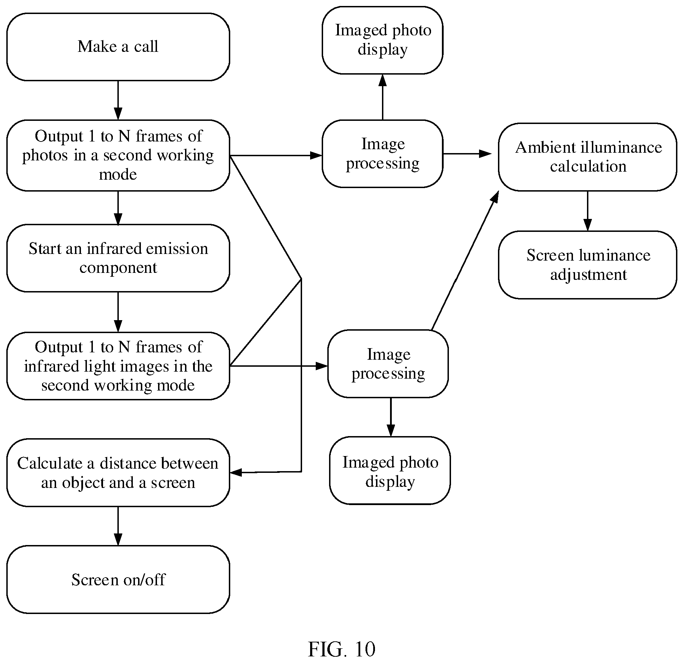

Refer to FIG. 10. When the image sensor is in the second working mode and the infrared emission component is closed, the image sensor generates 1 to N frames of photos based on the third control information. After the infrared emission component is started, the image sensor generates 1 to N frames of infrared light images based on the third control information. The processor acquires image data before and after the infrared emission component is started, subtracts the image data before the infrared emission component is started from the image data after the infrared emission component is started, and extracts a difference between the image data before and after the infrared emission component is started, to calculate the information about the distance between the external object and the screen. The electronic device may control the screen to be on or off based on the distance information. In addition, the processor may further process the photo, and the electronic device may further preview, take a photo, or record a video.

When the electronic device needs to perform imaging, proximity light detection, and ambient light detection, still with reference to FIG. 10, when the image sensor is in the second working mode and the infrared emission component is closed, the image sensor generates 1 to N frames of photos based on the third control information. After the infrared emission component is started, the image sensor generates 1 to N frames of infrared light images based on the third control information. The processor acquires image data before and after the infrared emission component is started, subtracts the image data before the infrared emission component is started from the image data after the infrared emission component is started, and extracts a difference between the image data before and after the infrared emission component is started, to calculate the information about the distance between the external object and the screen. The processor may control the screen to be on or off based on the distance information. In addition, the processor may further process the photo, and the electronic device may further preview, take a photo, or record a video. The processor may further detect the ambient illuminance based on the photo or the infrared light image, and the electronic device may further perform screen luminance adjustment based on the illuminance.

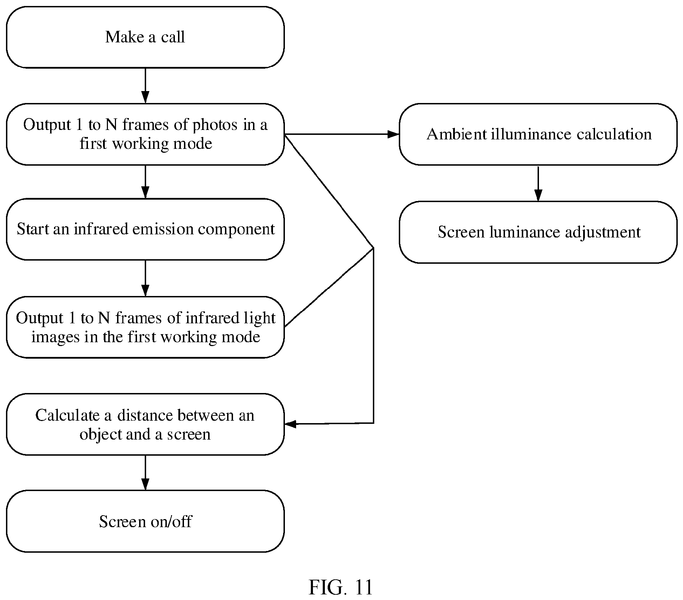

Refer to FIG. 11. When the image sensor is in the first working mode and the infrared emission component is closed, the image sensor generates 1 to N frames of photos based on the first control information. After the infrared emission component is started, the image sensor generates 1 to N frames of infrared light images based on the first control information. The processor acquires image data before and after the infrared emission component is started, subtracts the image data before the infrared emission component is started from the image data after the infrared emission component is started, and extracts a difference between the image data before and after the infrared emission component is started, to calculate the information about the distance between the external object and the screen. The electronic device may control the screen to be on or off based on the distance information. In addition, the processor may further output the ambient illuminance based on the obtained photo, and the electronic device may further perform screen luminance adjustment based on the illuminance.

Compared with an existing electronic device, the camera module and the electronic device provided in this application form the three-in-one component by combining the imaging assembly and the infrared emission component, so that proximity light detection and ambient light detection can be implemented, and the imaging function of the electronic device can be implemented. The camera module and the electronic device do not need to additionally provide an opening on the screen, can avoid a detection precision problem caused by placing the three-in-one component under the screen, and can reduce a quantity of components in the electronic device, thereby reducing costs. In addition, the light filter is set to ensure that an image output quality is not affected. The image sensor is set to the low power consumption mode and high resolution mode, so that a problem of high power consumption of the device can be resolved.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera module, comprising an infrared emission component and an imaging assembly, wherein the imaging assembly comprises an optical lens, a light filter, and an image sensor;
the infrared emission component is configured to emit infrared light, the optical lens is configured to receive infrared light reflected by an external object, and the optical lens is further configured to receive ambient light;
the light filter is disposed between the optical lens and the image sensor, and the light filter is configured to transmit ambient light and infrared light;
the imaging assembly is configured to perform imaging, and the image sensor is configured to receive ambient light information to generate a photo; and
the image sensor is further configured to receive infrared light information to generate an infrared light image, so that the imaging assembly detects a distance between the external object and the optical lens.

2. The camera module according to claim 1, wherein the image sensor is further configured to receive the ambient light information to generate an ambient light image, so that the imaging assembly detects ambient illuminance.

3. The camera module according to claim 2, wherein the image sensor comprises first control information, second control information, and third control information; and
the image sensor generates the infrared light image based on the first control information, the image sensor generates the ambient light image based on the second control information, and the image sensor generates the photo based on the third control information.

4. The camera module according to claim 3, wherein the image sensor has a first working mode and a second working mode, and resolution, a frame rate, and power consumption of the first working mode are less than those of the second working mode; and
when the image sensor is in the first working mode, the image sensor generates the infrared light image based on the first control information, and/or the image sensor generates the ambient light image based on the second control information; or
when the image sensor is in the second working mode, the image sensor outputs the infrared light image based on the first control information, and/or the image sensor generates the ambient light image based on the second control information, and/or the image sensor generates the photo based on the third control information.

5. The camera module according to claim 4, wherein the image sensor is further configured to generate the infrared light image based on the third control information, so that the imaging assembly detects the distance between the external object and the optical lens.

6. The camera module according to claim 4 or 5, wherein the image sensor is further configured to generate the ambient light image based on the third control information, so that the imaging assembly detects the ambient illuminance.

7. The camera module according to claim 4, wherein the image sensor is further configured to generate the infrared light image based on the second control information, so that the imaging assembly detects the distance between the external object and the optical lens; and
the image sensor generates the ambient light image based on the first control information, so that the imaging assembly detects the ambient illuminance.

8. The camera module according to any one of claims 1 to 7, wherein a wavelength of the infrared light emitted by the infrared emission component is 700 nm to 1000 nm.

9. The camera module according to claim 8, wherein a wavelength range of the infrared light that is capable of being transmitted by the light filter is greater than or equal to a wavelength range of the infrared light emitted by the infrared emission component.

10. The camera module according to claim 9, wherein a wavelength of the infrared light that is capable of being transmitted by the light filter is 700 nm to 1000 nm.

11. The camera module according to any one of claims 1 to 10, further comprising a substrate, wherein both the imaging assembly and the infrared emission component are disposed on the substrate.

12. The camera module according to claim 11, wherein a baffle is disposed between the imaging assembly and the infrared emission component, and the baffle is configured to prevent light crosstalk between the infrared emission component and the imaging assembly.

13. An electronic device, comprising a housing, a screen, and the camera module according to any one of claims 1 to 12, wherein
the screen is disposed on the housing; and
the camera module is disposed in the housing, a camera opening is disposed on the screen, and the optical lens of the camera module is located in the camera opening.

14. The electronic device according to claim 13, further comprising a processor, wherein the processor is electrically connected to the image sensor;
the processor is configured to control, based on the distance between the external object and the optical lens, the screen to be on or off; and
the processor is further configured to display the photo on the screen.
